# FASCICULE DE BREVET EUROPEEN

(11) **EP 3 885 842 B1**
(45) Date de publication et mention de la délivrance du brevet: **20.03.2024**
(21) Numéro de dépôt: 20165964.6
(22) Date de dépôt: 26.03.2020
(51) Int. Cl.: G04B 13/02, G04B 37/22, G04B 43/00, G04B 29/02, G04B 3/04, G04B 17/32, A44C 5/00, F16B 23/00

(54) **COMPOSANT HORLOGER AMAGNÉTIQUE AVEC RÉSISTANCE À L'USURE AMÉLIORÉE**
NICHTMAGNETISCHE UHRKOMPONENTE MIT VERBESSERTER VERSCHLEISSFESTIGKEIT
NON-MAGNETIC TIMEPIECE COMPONENT WITH IMPROVED WEAR RESISTANCE

(43) Date de publication de la demande: 29.09.2021
(73) Titulaire: Nivarox-FAR S.A., 2400 Le Locle (CH)
(72) Inventeur: CHARBON, Christian, 2054 Chézard-St-Martin (CH)
(74) Mandataire: ICB SA

(56) Documents cités:
- EP-A1- 1 241 539
- EP-A1- 3 273 304
- EP-A1- 3 502 288
- EP-A1- 3 591 099
- EP-A1- 3 626 855
- MARTIN N WILSON: "Advances in low-loss Nb-Ti strand cable", PROCEEDINGS / WAMSDO WORKSHOP : ACCELERATOR MAGNET SUPERCONDUCTORS, DESIGN AND OPIMIZATION ; CERN, GENEVA, SWITZERLAND, 19 - 23 MAY 2008, , 1 janvier 2009 (2009-01-01), pages 8-12, XP009139537, ISBN: 978-92-9083-325-3 Extrait de l'Internet: URL:http://cdsweb.cern.ch/record/1163708/f iles/p8.pdf

## Description

### Domaine de l'invention

L'invention se rapporte à un composant horloger amagnétique destiné au mouvement ou à l'habillage ainsi qu'à son procédé de fabrication.

### Arrière-plan de l'invention

Les alliages métalliques durs et non ferromagnétiques trouvent des applications dans de nombreux domaines, principalement pour des composants soumis à de fortes contraintes mécaniques et/ou tribologiques et devant rester insensibles aux champs magnétiques. C'est notamment le cas pour de nombreux composants horlogers, comme par exemple des roues, des pignons, des axes ou encore des ressorts au niveau du mouvement. Pour l'habillage externe, il est également intéressant d'obtenir des duretés élevées, par exemple pour la carrure, la lunette, le fond ou encore la couronne. En effet, une dureté élevée permet généralement d'obtenir une meilleure résistance à la rayure et à l'usure et donc une bonne durabilité de ces composants exposés à l'environnement extérieur.

En métallurgie, différents mécanismes permettent de durcir les alliages, en fonction de leurs compositions chimiques et de leurs histoires thermomécaniques. On connait ainsi le durcissement par solution solide, le durcissement structural, l'écrouissage, la transformation martensitique dans les aciers, la décomposition spinodale, ou encore le durcissement par diminution de la taille de grain (Hall Petch). Dans les alliages les plus remarquables, plusieurs de ces mécanismes de durcissement sont mis à profit simultanément. Toutefois, les alliages non ferromagnétiques qui présentent des duretés supérieures à 500 HV sont rares. Par ailleurs, de tels alliages sont difficiles à usiner et quasi impossibles à déformer, de par leurs duretés très élevées et leurs très faibles ductilités.

Du document EP 3 273 304, on connaît un composant horloger, et plus particulièrement un axe de pivotement, comprenant au moins une partie réalisée dans un alliage de cuivre amagnétique comprenant en poids entre 10 et 20% de Ni et entre 6 et 12% de Sn. Cet alliage présente une dureté intrinsèque peu élevée de l'ordre de 350HV. Afin d'augmenter la dureté, la surface externe du composant est durcie par diffusion d'atomes ou encore par dépôt d'une couche de TiN, de diamant, etc., ou encore par un processus d'implantation ionique.

A ce jour, il existe toujours un besoin pour des nouveaux composants horlogers amagnétiques présentant une résistance à l'usure améliorée et, le cas échéant selon le type de composant, également des propriétés tribologiques améliorées.

### Buts de l'invention

Le but de la présente invention est de proposer un composant horloger permettant à la fois de limiter la sensibilité aux champs magnétiques et d'obtenir une dureté améliorée compatible avec les exigences de résistance à l'usure et aux chocs dans le domaine horloger tout en présentant des propriétés tribologiques améliorées pour des composants tels que les axes de pivotement, les roues, etc.

A cet effet, l'invention se rapporte à un composant horloger destiné au mouvement ou à l'habillage comportant un substrat réalisé dans un alliage de cuivre, avec au moins une partie du substrat comprenant en surface une couche d'intermétalliques CuₓTi_{Y}. Ce composant combine les avantages de l'alliage de cuivre amagnétique et la dureté de la couche extérieure en intermétalliques pour les parties les plus sollicitées avec pour résultat une résistance à l'usure améliorée. En outre, la présence de la couche d'intermétalliques en surface permet de réduire le coefficient de frottement en utilisation.

La présente invention se rapporte également au procédé de fabrication dudit composant qui comporte les étapes suivantes :
a) Mise à disposition d'un substrat réalisé dans un alliage de cuivre, au moins une partie dudit substrat ayant déjà sensiblement la forme finale du composant horloger amagnétique,
b) Dépôt d'une couche de titane sur ladite partie du substrat,
c) Traitement thermique de diffusion du titane dans l'alliage de cuivre pour former une couche d'intermétalliques Cuₓ, Ti_{y} sur ladite partie.

Ce traitement de diffusion permet d'obtenir une couche extérieure dure qui adhère parfaitement au substrat. En effet, la couche d'intermétalliques forme une couche qui est continue avec le substrat grâce à la diffusion du titane dans l'alliage de cuivre du substrat.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation d'un composant horloger, et plus précisément d'un axe de balancier, selon l'invention ; et
- la figure 2 est une coupe partielle d'un des pivots de l'axe selon la figure 1 enrobé d'une couche extérieure d'intermétalliques.

### Description de l'invention

Dans la présente description, le terme alliage « amagnétique » signifie un alliage paramagnétique ou diamagnétique ou antiferromagnétique, dont la perméabilité magnétique est inférieure ou égale à 1.01.

L'invention se rapporte à un composant horloger destiné au mouvement ou à l'habillage. Ainsi, il peut s'agir d'un composant d'habillage choisi parmi la liste non exhaustive comprenant une carrure, un fond, une lunette, un poussoir, un maillon de bracelet, un bracelet, une boucle ardillon et une couronne. Pour le mouvement, on peut citer de manière non exhaustive une planche d'ancre, une planche de roue, un rouage, un axe, une tige d'ancre et un pignon. Plus spécifiquement, le composant horloger peut être un axe de pivotement avec au moins une partie dudit axe tel qu'un pivot, une vis, une tige de remontoir ou un piton présentant une résistance à l'usure et des propriétés tribologiques améliorées grâce au procédé selon l'invention.

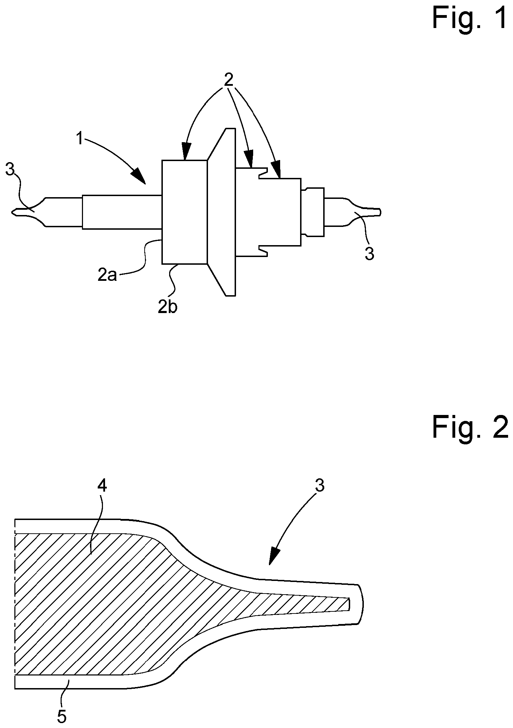

L'invention sera décrite ci-après dans le cadre d'une application à un axe de balancier amagnétique, référencé 1 de manière générale pour un composant horloger, tel que représenté à la figure 1. Les pièces de ce type présentent au niveau du corps des diamètres inférieurs à 2 mm, et des pivots de diamètre inférieur à 0.2 mm, avec une précision de quelques microns.

En se référant à la figure 1, on peut voir l'axe de balancier 1 selon l'invention qui comporte une pluralité de sections 2 de diamètres différents, formées de préférence par décolletage ou toute autre technique d'usinage par enlèvement de copeaux, et définissant classiquement des portées 2a et des épaulements 2b arrangés entre deux portions d'extrémité définissant deux pivots 3. Ces pivots sont destinés à venir chacun pivoter dans un palier, typiquement dans un orifice d'une pierre ou rubis.

Selon l'invention et tel que représenté à la figure 2, au moins une partie du composant horloger 1 et, dans l'exemple illustré au moins un pivot 3, est formée d'un substrat 4 réalisé dans un alliage métallique amagnétique afin de limiter sa sensibilité aux champs magnétiques. Cet alliage est tout alliage cuivreux tel que, à titre d'exemple, un alliage CuNi, CuSn, CuZn, CuNiZn, CuNiSn, CuAI, CuAINi, CuAINiFe, CuBe ou CuBePb. On peut plus spécifiquement, toujours à titre d'exemple, choisir un alliage CuNi15Sn8, CuNi9Sn6 ou CuNi7.5Sn5 parmi les alliages CuNiSn et CuBe2 ou CuBe2Pb parmi les alliages CuBe. Selon l'invention, au moins une partie du substrat 4 comporte en surface une couche d'intermétalliques CuₓTi_{y}, référencée 5. Cette couche d'intermétalliques comporte un ou plusieurs des composés suivants : Cu₄Ti, Cu₂Ti, CuTi, Cu₃Ti₂, CuTi₂, Cu₄Ti₃. Elle a une épaisseur comprise entre 20 nm et 10 µm, de préférence entre 500 nm et 2.5 µm.

Selon l'invention, la couche d'intermétalliques a une dureté HV_{0.01} (charge de 10g) supérieure à 400 HV_{0.01} et préférentiellement supérieure à 500 HV_{0.01}. Quant au substrat, il a une dureté inférieure ou égale à 400 HV_{0.01}.

Le procédé de fabrication du composant horloger selon l'invention comporte les étapes suivantes :
- Mise à disposition du substrat dans l'alliage de cuivre (Cu) avec au moins une partie dudit substrat ayant déjà sensiblement la forme finale du composant horloger,
- Dépôt d'une couche de titane (Ti) sur ladite partie,
- Traitement thermique de diffusion pour transformer au moins partiellement ladite couche de titane en une couche d'intermétalliques CuₓTi_{y},

Selon l'invention, le substrat peut être réalisé par toute technique appropriée : coulée, laminage, métallurgie des poudres, fabrication additive, etc, suivie, si requis pour mettre à dimension, d'un usinage. Il peut être entièrement mis à dimension avant le dépôt de la couche de titane. Il est également envisageable que seule une partie du substrat soit à dimension avant le dépôt de la couche de titane et que le reste du composant soit mis à dimension après le traitement thermique de diffusion. Plus spécifiquement pour un axe de balancier, au moins le pivot est mis à dimension par décolletage ou toute autre technique d'usinage par enlèvement de copeaux à partir de barres en alliage de cuivre de diamètre inférieur à 3 mm, et préférentiellement inférieur à 2 mm avant le dépôt de la couche de titane.

L'apport de la couche de titane autour du substrat peut être réalisé par voie galvanique, PVD, CVD, ALD ou tout autre procédé approprié. La couche déposée a une épaisseur comprise entre 20 nm et 10 µm, de préférence entre 500 nm et 2.5 µm. Le traitement thermique de diffusion est réalisé dans une gamme de températures comprise entre 600 et 900°C pendant un temps compris entre 30 minutes et 10 heures, de préférence entre 1 et 6 heures. Selon une variante de l'invention, toute la couche de titane est transformée en intermétalliques. Selon une autre variante de l'invention, la couche de titane est seulement partiellement transformée en intermétalliques, une couche de titane subsistant alors autour de la couche d'intermétalliques. Cette couche de titane résiduelle a une épaisseur comprise entre 1 nm et 5 µm. Elle peut être maintenue sur le produit final ou éliminée par attaque chimique sélective ou polissage.

Le procédé peut en outre comporter un traitement thermique de durcissement en volume du substrat, tel que, par exemple, un durcissement de décomposition spinodale pour les alliages de la famille CuNiSn ou un durcissement structural pour les alliages de la famille CuBe, dans une gamme de températures comprise entre 300 et 500°C, de préférence entre 320°C à 450°C, pendant un temps compris entre 30 minutes et 3 heures, plus particulièrement entre 30 minutes et 1h30. Le traitement thermique de durcissement requiert au préalable une mise en solution à température élevée des éléments impliqués dans le durcissement, Ni et Sn pour un alliage CuNiSn ou Be pour un alliage CuBe ou CuBePb, suivie d'une trempe pour maintenir les éléments en solution avant de réaliser le traitement thermique de durcissement. Selon l'invention, le traitement thermique de diffusion entre 600 et 900°C peut être mis à profit pour effectuer la mise en solution. A titre d'exemple, pour un alliage CuBe2Pb, le traitement de diffusion du Ti et de mise en solution du Be est réalisé à 800°C, le substrat est ensuite refroidi rapidement jusqu'à une température inférieure à 200°C avant d'être traité à 325°C pendant 3h pour la précipitation du CuBe2. De manière générale, le procédé de fabrication comporte ainsi à la suite de l'étape de dépôt d'une couche de titane, les étapes de :
- Traitement thermique de diffusion du Ti et de mise en solution, par exemple du Ni et du Sn pour un alliage CuNiSn ou du Be pour un alliage CuBe ou CuBePb, à une température comprise entre 600 et 900°C pendant un temps compris entre 30 minutes et 10 heures, de préférence entre 1 et 6 heures,
- Trempe jusqu'à une température inférieure à 200°C,
- Traitement thermique de durcissement à une température comprise entre 300 et 500°C, de préférence entre 320°C à 450°C, pendant un temps compris entre 30 minutes et 3 heures, de préférence, entre 30 et 90 minutes.

Le procédé de fabrication peut être finalisé après le traitement thermique de diffusion en surface ou de durcissement en volume le cas échéant, par une étape de finition de surface telle qu'un polissage ou un roulage.

## Revendications

1. Composant horloger amagnétique (1) comprenant un substrat (4) réalisé dans un alliage de cuivre, **caractérisé en ce qu'**au moins une partie du substrat (4) comporte en surface une couche (5) comprenant des intermétalliques CuₓTi_{y}.

2. Composant horloger amagnétique (1) selon la revendication 1, **caractérisé en ce que** l'alliage de cuivre est choisi parmi le groupe comprenant les alliages CuNi, CuSn, CuZn, CuNiZn, CuNiSn, CuBe, CuBePb, CuAI, CuAINi ou CuAINiFe.

3. Composant horloger amagnétique (1) selon l'une des revendications précédentes, **caractérisé en ce que** la couche d'intermétalliques (5) a une épaisseur comprise entre 20 nm et 10 microns, de préférence entre 500 nm et 2.5 µm.

4. Composant horloger amagnétique (1) selon l'une des revendications précédentes, **caractérisé en ce que** la couche d'intermétalliques (5) a une dureté supérieure à 400 HV_{0.01}, préférentiellement supérieure à 500 HV_{0.01}.

5. Composant horloger amagnétique (1) selon l'une des revendications précédentes, **caractérisé en ce que** la couche d'intermétalliques (5) comporte un ou plusieurs composés choisis parmi le groupe comprenant le Cu₄Ti, Cu₂Ti, CuTi, Cu₃Ti₂, CuTi₂ et le Cu₄Ti₃.

6. Composant horloger amagnétique (1) selon l'une des revendications précédentes, **caractérisé en ce que** la couche d'intermétalliques (5) comporte sur sa surface extérieure une couche de titane résiduelle.

7. Composant horloger amagnétique (1) selon la revendication précédente, **caractérisé en ce que** la couche de titane résiduelle a une épaisseur comprise entre 1 nm et 5 µm.

8. Composant horloger amagnétique (1) selon l'une des revendications précédentes, **caractérisé en ce qu'**il s'agit d'un composant du mouvement ou de l'habillage.

9. Composant horloger amagnétique (1) selon l'une des revendications précédentes, **caractérisé en ce qu'**il est choisi parmi le groupe comprenant une planche d'ancre, une planche de roue, un rouage, un axe, une tige d'ancre et un pignon.

10. Composant horloger amagnétique (1) selon les revendications 1 à 8, **caractérisé en ce qu'**il consiste en un axe de pivotement, ladite partie étant un pivot (3), une vis, une tige de remontoir ou un piton.

11. Composant horloger amagnétique (1) selon l'une des revendications 1 à 9, **caractérisé en ce qu'**il est choisi parmi le groupe comprenant une carrure, un fond, une lunette, un poussoir, un maillon de bracelet, un bracelet et une couronne.

12. Procédé de fabrication d'un composant horloger amagnétique (1) comportant les étapes suivantes:
a) Mise à disposition d'un substrat (4) réalisé dans un alliage de cuivre, au moins une partie dudit substrat (4) ayant déjà sensiblement la forme finale du composant horloger amagnétique (1),
b) Dépôt d'une couche de titane sur ladite partie du substrat (4),
c) Traitement thermique de diffusion du titane dans l'alliage de cuivre pour former une couche d'intermétalliques (5) Cuₓ, Ti_{y} sur ladite partie.

13. Procédé de fabrication selon la revendication précédente, **caractérisé en ce que** le traitement thermique de diffusion est réalisé à une température comprise entre 600 et 900°C pendant un temps compris entre 30 minutes et 10 heures, de préférence entre 1 et 6 heures.

14. Procédé de fabrication selon la revendication 12 ou 13, **caractérisé en ce que** le substrat (4) est fabriqué par coulée, laminage, métallurgie des poudres ou fabrication additive éventuellement suivi d'un usinage.

15. Procédé de fabrication selon l'une des revendications 12 à 14, **caractérisé en ce que** la couche de titane est déposée par voie galvanique, par PVD, par ALD ou par CVD.

16. Procédé de fabrication selon l'une des revendications 12 à 15, **caractérisé en ce que** la couche de titane déposée a une épaisseur comprise entre 20 nm et 10 µm, de préférence entre 500 nm et 2.5 µm.

17. Procédé de fabrication selon l'une des revendications 12 à 16, **caractérisé en ce qu'**il comporte une étape d'enlèvement sélectif de la couche de titane résiduelle subsistant autour de la couche d'intermétalliques (5) après le traitement thermique de diffusion.

18. Procédé de fabrication selon l'une des revendications 12 à 17, **caractérisé en ce qu'**il comporte une étape de traitement thermique de durcissement en volume du substrat (4) réalisée à une température comprise entre 300 et 500°C, de préférence entre 320°C à 450°C, pendant un temps compris entre 30 minutes et 3 heures, de préférence, entre 30 et 90 minutes, ladite étape étant réalisée après l'étape c).

19. Procédé de fabrication selon la revendication précédente, **caractérisé en ce qu'**il comporte une étape de trempe jusqu'à une température inférieure à 200°C entre l'étape c) de traitement thermique de diffusion et l'étape de traitement thermique de durcissement en volume.

20. Procédé de fabrication selon la revendication précédente, **caractérisé en ce que** l'étape c) de traitement thermique de diffusion est mise à profit pour mettre en solution du Ni et du Sn pour un alliage CuNiSn ou du Be pour un alliage CuBe ou CuBePb.

## Patentansprüche

1. Amagnetische Uhrenkomponente (1) mit einem Substrat (4), das aus einer Kupferlegierung hergestellt ist, **dadurch gekennzeichnet, dass** mindestens ein Teil des Substrats (4) an der Oberfläche eine Schicht (5) aufweist, die intermetallische CuₓTi_{y} umfasst.

2. Amagnetische Uhrenkomponente (1) nach Anspruch 1, **dadurch gekennzeichnet, dass** die Kupferlegierung aus der Gruppe ausgewählt ist, die aus den Legierungen CuNi, CuSn, CuZn, CuNiZn, CuNiSn, CuBe, CuBePb, CuAl, CuAINi oder CuAINiFe besteht.

3. Amagnetische Uhrenkomponente (1) nach einem der vorhergehenden Ansprüche, **dadurch gekennzeichnet, dass** die Intermetallschicht (5) eine Dicke zwischen 20 nm und 10 Mikrometern, vorzugsweise zwischen 500 nm und 2,5 µm, aufweist.

4. Amagnetische Uhrenkomponente (1) nach einem der vorhergehenden Ansprüche, **dadurch gekennzeichnet, dass** die intermetallische Schicht (5) eine Härte von mehr als 400 HV_{0.01}, vorzugsweise mehr als 500 HV_{0.01}, aufweist.

5. Amagnetische Uhrenkomponente (1) nach einem der vorhergehenden Ansprüche, **dadurch gekennzeichnet, dass** die intermetallische Schicht (5) eine oder mehrere Verbindungen enthält, die aus der Gruppe bestehend aus Cu₄Ti, Cu₂Ti, CuTi, Cu₃Ti₂, CuTi₂ und Cu₄Ti₃ ausgewählt sind.

6. Amagnetische Uhrenkomponente (1) nach einem der vorhergehenden Ansprüche, **dadurch gekennzeichnet, dass** die intermetallische Schicht (5) auf ihrer Außenfläche eine Resttitanschicht aufweist.

7. Amagnetische Uhrenkomponente (1) nach dem vorhergehenden Anspruch, **dadurch gekennzeichnet, dass** die verbleibende Titanschicht eine Dicke zwischen 1 nm und 5 µm aufweist.

8. Amagnetische Uhrenkomponente (1) nach einem der vorhergehenden Ansprüche, **dadurch gekennzeichnet, dass** es sich um eine Komponente des Uhrwerks oder des Gehäuses handelt.

9. Amagnetische Uhrenkomponente (1) nach einem der vorhergehenden Ansprüche, **dadurch gekennzeichnet, dass** sie aus der Gruppe ausgewählt ist, die aus einem Ankerbrett, einem Radbrett, einem Räderwerk, einer Achse, einer Ankerstange und einem Ritzel besteht.

10. Amagnetische Uhrenkomponente (1) nach den Ansprüchen 1 bis 8, **dadurch gekennzeichnet, dass** sie aus einer Schwenkachse besteht, wobei es sich bei dem Teil um einen Zapfen (3), eine Schraube, eine Aufzugsstange oder ein Spiralklötzchen handelt.

11. Amagnetische Uhrenkomponente (1) nach einem der Ansprüche 1 bis 9, **dadurch gekennzeichnet, dass** sie aus der Gruppe ausgewählt ist, die aus einem Gehäusemittelteil, einem Boden, einer Lünette, einem Drücker, einem Armbandglied, einem Armband und einer Krone besteht.

12. Herstellungsverfahren einer amagnetischen Uhrenkomponente (1) mit den folgenden Schritten:
a) Bereitstellung eines Substrats (4) aus einer Kupferlegierung, wobei mindestens ein Teil des Substrats (4) bereits im Wesentlichen die endgültige Form der amagnetischen Uhrenkomponente (1) hat,
b) Abscheidung einer Titanschicht auf dem genannten Teil des Substrats (4),
c) Wärmebehandlung zur Diffusion von Titan in die Kupferlegierung, um eine intermetallische Schicht (5) Cuₓ, Ti_{y} auf diesem Teil zu bilden.

13. Herstellungsverfahren nach dem vorhergehenden Anspruch, **dadurch gekennzeichnet, dass** die Wärmebehandlung zur Diffusion bei einer Temperatur zwischen 600 und 900 °C für eine Zeit zwischen 30 Minuten und 10 Stunden, vorzugsweise zwischen 1 und 6 Stunden, durchgeführt wird.

14. Herstellungsverfahren nach Anspruch 12 oder 13, **dadurch gekennzeichnet, dass** das Substrat (4) durch Gießen, Walzen, Pulvermetallurgie oder additive Herstellung, eventuell gefolgt von einer maschinellen Bearbeitung, hergestellt wird.

15. Herstellungsverfahren nach einem der Ansprüche 12 bis 14, **dadurch gekennzeichnet, dass** die Titanschicht galvanisch, durch PVD, ALD oder CVD abgeschieden wird.

16. Herstellungsverfahren nach einem der Ansprüche 12 bis 15, **dadurch gekennzeichnet, dass** die abgeschiedene Titanschicht eine Dicke zwischen 20 nm und 10 µm, vorzugsweise zwischen 500 nm und 2,5 µm, aufweist.

17. Herstellungsverfahren nach einem der Ansprüche 12 bis 16, **dadurch gekennzeichnet, dass** es einen Schritt zur selektiven Entfernung der restlichen Titanschicht umfasst, die nach der Wärmebehandlung zur Diffusion um die intermetallische Schicht (5) herum verbleibt.

18. Herstellungsverfahren nach einem der Ansprüche 12 bis 17, **dadurch gekennzeichnet, dass** es einen Schritt zur Wärmebehandlung zur Volumenhärtung des Substrats (4) umfasst, der bei einer Temperatur zwischen 300 und 500 °C, vorzugsweise zwischen 320 °C und 450 °C, während einer Zeit zwischen 30 Minuten und 3 Stunden, vorzugsweise zwischen 30 und 90 Minuten, durchgeführt wird, wobei der Schritt nach Schritt c) durchgeführt wird.

19. Herstellungsverfahren nach dem vorhergehenden Anspruch, **dadurch gekennzeichnet, dass** es zwischen dem Schritt c) der Wärmebehandlung zur Diffusion und dem Schritt der Wärmebehandlung zur Volumenhärtung einen Schritt des Abschreckens auf eine Temperatur unter 200 °C umfasst.

20. Herstellungsverfahren nach dem vorhergehenden Anspruch, **dadurch gekennzeichnet, dass** der Schritt c) der Wärmebehandlung zur Diffusion genutzt wird, um Ni und Sn für eine CuNiSn-Legierung oder Be für eine CuBe- oder CuBePb-Legierung in Lösung zu bringen.

## Claims

1. Non-magnetic watch component (1) comprising a substrate (4) made of a copper alloy, **characterized in that** at least one part of the substrate (4) comprises a surface layer (5) including CuₓTi_{y} intermetallics.

2. Non-magnetic watch component (1) according to claim 1, **characterized in that** the copper alloy is chosen from the group including the alloys CuNi, CuSn, CuZn, CuNiZn, CuNiSn, CuBe, CuBePb, CuAI, CuAINi and CuAINiFe.

3. Non-magnetic watch component (1) according to any of the preceding claims, **characterized in that** the intermetallic layer (5) has a thickness comprised between 20 nm and 10 microns and preferably between 500 nm and 2.5 µm.

4. Non-magnetic watch component (1) according to any of the preceding claims, **characterized in that** the intermetallic layer (5) has a hardness of more than 400 HV_{0.01}, and preferably more than 500 HV_{0.01}.

5. Non-magnetic watch component (1) according to any of the preceding claims, **characterized in that** the intermetallic layer (5) includes one or more compounds chosen from the group including Cu₄Ti, Cu₂Ti, CuTi, Cu₃Ti₂, CuTi₂ and Cu₄Ti₃.

6. Non-magnetic watch component (1) according to any of the preceding claims, **characterized in that** the intermetallic layer (5) has on the outer surface thereof a residual layer of titanium.

7. Non-magnetic watch component (1) according to the preceding claim, **characterized in that** the residual titanium layer has a thickness comprised between 1 nm and 5 µm.

8. Non-magnetic watch component (1) according to any of the preceding claims, **characterized in** the component is a component of the movement or of the external watch parts.

9. Non-magnetic watch component (1) according to any of the preceding claims, **characterized in that** the component is chosen from the group including a pallet plate, a wheel plate, a gear train, an arbor, a pallet staff and a pinion.

10. Non-magnetic watch component (1) according to claims 1 to 8, **characterized in that** the component consists of a pivot arbor, said part being a pivot (3), a screw, a winding stem or a balance spring stud.

11. Non-magnetic watch component (1) according to any of claims 1 to 9, **characterized in that** the component is chosen from the group including a case middle, a case back, a bezel, a pusher, a bracelet link, a bracelet and a crown.

12. Method for manufacturing a non-magnetic watch component (1) including the following steps:
a) Providing a substrate (4) made of a copper alloy, wherein at least one part of said substrate (4) already substantially has the final shape of the non-magnetic watch component (1),
b) Depositing a titanium layer on said part of the substrate (4),
c) Heat treating to diffuse the titanium in the copper alloy to form a layer of Cuₓ, Ti_{y} intermetallics (5) on said part.

13. Manufacturing method according to the preceding claim, **characterized in that** the diffusion heat treatment is carried out at a temperature comprised between 600°C and 900°C for a time comprised between 30 minutes and 10 hours and preferably between 1 and 6 hours.

14. Manufacturing method according to claim 12 or 13, **characterized in that** the substrate (4) is manufactured by casting, rolling, powder metallurgy, or additive manufacturing possibly followed by a machining operation.

15. Manufacturing method according to any of claims 12 to 14, **characterized in that** the titanium layer is deposited by galvanic means, by PVD, by ALD or by CVD.

16. Manufacturing method according to any of claims 12 to 15, **characterized in that** the deposited titanium layer has a thickness comprised between 20 nm and 10 µm and preferably between 500 nm and 2.5 µm.

17. Manufacturing method according to any of claims 12 to 16, **characterized in that** the method includes a step of selectively removing the residual titanium layer remaining around the intermetallic layer (5) after the diffusion heat treatment.

18. Manufacturing method according to any of claims 12 to 17, **characterized in that** the method includes a heat treatment step of volume hardening the substrate (4) carried out at a temperature comprised between 300 and 500°C, preferably between 320°C and 450°C, for a time comprised between 30 minutes and 3 hours, preferably between 30 and 90 minutes, said step being carried out after step c).

19. Manufacturing method according to the preceding claim, **characterized in that** the method includes a step of quenching to a temperature below 200°C between the diffusion heat treatment step c) and the volume hardening heat treatment step.

20. Manufacturing method according to the preceding claim, **characterized in that** the diffusion heat treatment step c) is used for the dissolution of Ni and Sn for a CuNiSn alloy or of Be for a CuBe or CuBePb alloy.
